# EUROPÄISCHE PATENTSCHRIFT

(11) **EP 2 505 891 B1**
(45) Veröffentlichungstag und Bekanntmachung des Hinweises auf die Patenterteilung: **30.03.2022**
(21) Anmeldenummer: 12155495.0
(22) Anmeldetag: 15.02.2012
(51) Int. Cl.: F16L 5/04, A62C 2/06, H02G 3/04

(54) **Halter für eine Brandschutzmanschette**
Holder for a flame retardant sleeve
Support pour une manchette pare-feu

(30) Priorität: 28.03.2011 DE 102011006201
(43) Veröffentlichungstag der Anmeldung: 03.10.2012
(73) Patentinhaber: HILTI Aktiengesellschaft, 9494 Schaan (LI)
(72) Erfinder: Förg, Christian, 86862 Dillishausen (DE); Kögler, Markus, 86916 Kaufering (DE)
(74) Vertreter: Hilti Aktiengesellschaft Corporate Intellectual Property

(56) Entgegenhaltungen:
- EP-A1- 1 422 459
- EP-A2- 0 982 522
- DE-A1-102009 001 961

## Beschreibung

Die Erfindung betrifft einen Halter für eine Brandschutzmanschette, mit einem Befestigungsabschnitt, einem Abstützabschnitt und einem Halteabschnitt.

Eine Brandschutzmanschette dient dazu, im Brandfall Durchbrüche durch Wände, Decken oder Böden von Gebäuden zu verschließen, durch die brennbare oder schmelzende Rohre, Kabel oder Ähnliches hindurchgeführt sind. Zu diesem Zweck wird die Brandschutzmanschette um die Rohre oder Kabel herum angeordnet, sodass bei einem Brand das sich dann ausdehnende Intumeszenzmaterial den Durchbruch möglichst dicht verschließt. Dabei kann die Brandschutzmanschette entweder auf der Außenseite der Öffnung angeordnet sein, also beispielsweise an der Wand, durch die sich der Durchbruch hindurch erstreckt, oder aber bereits unmittelbar im Durchbruch, wenn dieser einen solchen Durchmesser hat, dass zwischen den Rohren oder Kabeln und der Öffnung noch ein ausreichender Freiraum zur Verfügung steht.

Aus der DE 10 2009 001 961 A1 ist ein Halter der eingangs genannten Art für eine Brandschutzmanschette bekannt, die aus einem langen Streifen aus sehr dünnem Intumeszenzmaterial besteht, der mehrfach um das abzudichtende Rohr oder die Kabel gewickelt und dann mittels mehrerer Halter fixiert wird. Der Halteabschnitt ist hier als Blechlasche ausgeführt. Der Abstützabschnitt erstreckt sich im rechten Winkel zum Befestigungsabschnitt, mit dem der Halter an beispielsweise einer Wand oder einer Decke befestigt wird, und stützt den Außenrand der Brandschutzmanschette. Der Halteabschnitt umgreift die ringförmige Stirnseite der Brandschutzmanschette und drückt die mehreren Lagen aufeinander. Nachteilig bei dieser Anordnung ist, dass ein Teil des Intumeszenzmaterials sich in, bezogen auf den zu verschließenden Durchbruch, axialer Richtung ausbreiten kann, wodurch Material verloren geht. Dies muss damit kompensiert werden, dass eine größere Menge an Intumeszenzmaterial bereitgestellt werden muss.

Aus der DE 102 17 174 A1 ist ein Halter bekannt, der einen Befestigungsabschnitt und einen Abstützabschnitt aufweist. Der Abstützabschnitt erstreckt sich senkrecht zum Befestigungsabschnitt und liegt an der zylindrischen Außenwand der Brandschutzmanschette an. Diese ist durch ein Lochblech gebildet, und der Abstützabschnitt weist mehrere Dorne auf, die in Öffnungen des Lochblechs eingreifen und dadurch die Brandschutzmanschette fixieren können.

Die Aufgabe der Erfindung besteht darin, einen Halter zu schaffen, der eine besondere effiziente Verwendung einer Brandschutzmanschette ermöglicht.

Die Aufgabe wird gelöst durch einen Halter gemäß Anspruch 1.

Zur Lösung dieser Aufgabe ist erfindungsgemäß bei einem Halter der eingangs genannten Art vorgesehen, dass der Halteabschnitt mit einem Verankerungsmittel versehen ist, das formschlüssig mit einem Mantel einer Brandschutzmanschette zusammenwirken kann. Dies ermöglicht es, mit geringem Aufwand die Brandschutzmanschette so zu montieren, dass der Mantel eine Richtwirkung auf das Intumeszenzmaterial auswirkt, wenn dieses expandiert. Dadurch kann verhindert werden, dass Intumeszenzmaterial in axialer Richtung entweicht und nicht zum Abdichten des Durchbruchs zur Verfügung steht.

Gemäß einer nicht erfindungsgemäßen Ausführungsform ist vorgesehen, dass der Halteabschnitt im rechten Winkel zum Abstützabschnitt liegt und das Verankerungsmittel sich etwa parallel zum Abstützabschnitt erstreckt. Bei dieser nicht erfindungsgemäßen Ausführungsform liegt der Halteabschnitt gegenüber der ringförmigen Stirnseite der Brandschutzmanschette, sodass er die Stirnseite fixiert und dadurch gewährleistet, dass sich das Intumeszenzmaterial im Wesentlichen in radialer Richtung nach innen ausdehnt.

Gemäß der Erfindung ist vorgesehen, dass der Halteabschnitt zweifach abgewinkelt ausgehend vom Abstützabschnitt ausgeführt ist, sodass er zusammen mit dem Abstützabschnitt einen Aufnahmekanal für einen Randabschnitt der Brandschutzmanschette bildet. Dadurch greift der Halteabschnitt die ringförmige Stirnseite der Brandschutzmanschette, sodass das Verankerungsmittel dem Abstützabschnitt gegenüberliegt. Unter der Wirkung des Blähdrucks des Intumeszenzmaterials ergibt sich eine besonders zuverlässige Verankerung des Mantels der Brandschutzmanschette im Halteabschnitt.

Gemäß einer Ausführungsform der Erfindung kann vorgesehen sein, dass das Verankerungsmittel sich in einem Winkel kleiner 90° zum Abstützabschnitt und hin zum Boden des Aufnahmekanals erstreckt. Diese Ausrichtung des Verankerungsmittels erleichtert es, den Halteabschnitt auf den Rand der Brandschutzmanschette aufzuschieben.

Das Verankerungsmittel ist erfindungsgemäß durch mindestens einen Dorn gebildet. Dieses Verankerungsmittel ist besonders gut geeignet, formschlüssig mit dem Mantel der Brandschutzmanschette zusammenzuwirken. Unter "formschlüssig zusammenwirken" ist nicht notwendigerweise zu verstehen, dass der Dorn den Mantel durchdringt. Es hat sich herausgestellt, dass sich das Verankerungsmittel aufgrund des wirkenden Blähdrucks auch bei einem sehr stabilen Mantel so weit in diesen eingräbt, dass eine formschlüssige Verankerung gewährleistet ist. Wenn ein Mantel aus einem Material mit geringerer Widerstandsfähigkeit verwendet wird, kann der Dorn den Mantel auch durchdringen. Es ist jedoch nicht nötig, dass dies bereits bei der Montage des Halters an der Brandschutzmanschette erfolgt. Dies erleichtert eine eventuelle Demontage des Halters. Im Brandfall kann dann der wirkende Blähdruck den Mantel so fest gegen das Verankerungsmittel drücken, dass der Dorn durch den Mantel hindurchgedrückt wird.

Gemäß einer nicht erfindungsgemäßen Ausführungsform ist vorgesehen, dass eine Kralle mit dem Halteabschnitt durch eine Sollbiegestelle verbunden ist. Dies ermöglicht, die Kralle während des Montagevorgangs so zu verformen, dass sie sich tief in die Brandschutzmanschette eingräbt, um für eine entsprechend zuverlässige Verankerung zu sorgen.

Gemäß einer Ausgestaltung der Erfindung kann am Abstützabschnitt mindestens ein Arretiermittel vorgesehen sein, beispielsweise ein Dorn. Das Arretiermittel erhöht die Abstützwirkung des Abstützabschnittes auf die Außenfläche des Mantels und dient zusätzlich als Verrutschsicherung.

Zur Lösung der oben genannten Aufgabe ist erfindungsgemäß auch eine Baugruppe aus einem Halter und einer Brandschutzmanschette vorgesehen, die einen Streifen aus einem Intumeszenzmaterial aufweist, der von einem Mantel an mindestens einer Flachseite und einem Längsrand umgeben ist, wobei das Verankerungsmittel sich in den Mantel im Bereich des Längsrandes eingraben kann. Hinsichtlich der sich ergebenden Vorteile wird auf die obigen Erläuterungen verwiesen.

Die Erfindung wird nachfolgend anhand verschiedener Ausführungsformen beschrieben, die in den beigefügten Zeichnungen dargestellt sind. In diesen zeigen:
- Figur 1 in einer perspektivischen, geschnittenen Ansicht eine Brandschutzmanschette, die zusammen mit einem erfindungsgemäßen Halter verwendet werden kann;
- Figur 2 in einer schematischen Draufsicht eine Brandschutzmanschette, die mit einem erfindungsgemäßen Halter montiert ist;
- Figur 3 in einer perspektivischen Ansicht einen Halter gemäß einer ersten nicht erfindungsgemäßen Ausführungsform der Erfindung;
- Figur 4 in einer perspektivischen Ansicht einen Halter gemäß einer zweiten Ausführungsform der Erfindung;
- Figur 5 in einer perspektivischen Ansicht einen Halter gemäß einer dritten nicht erfindungsgemäßen Ausführungsform;
- Figur 6 in einer schematischen Schnittansicht eine Ausführungsvariante einer Brandschutzmanschette, die zusammen mit einem erfindungsgemäßen Halter verwendet werden kann;
- Figur 7 in einer schematischen, geschnittenen Ansicht eine weitere Variante einer Brandschutzmanschette;
- Figur 8 in einer schematischen Schnittansicht den nicht erfindungsgemäßen Halter von Figur 3 zusammen mit der Brandschutzmanschette von Figur 7;
- die Figuren 9a bis 9c verschiedene Schritte während der Montage eines Halters gemäß einer vierten nicht erfindungsgemäßen Ausführungsform;
- die Figuren 10a bis 10c einen Wanddurchbruch im Ausgangszustand, zu Beginn eines Brandes und im durch die Brandschutzmanschette verschlossenen Zustand.

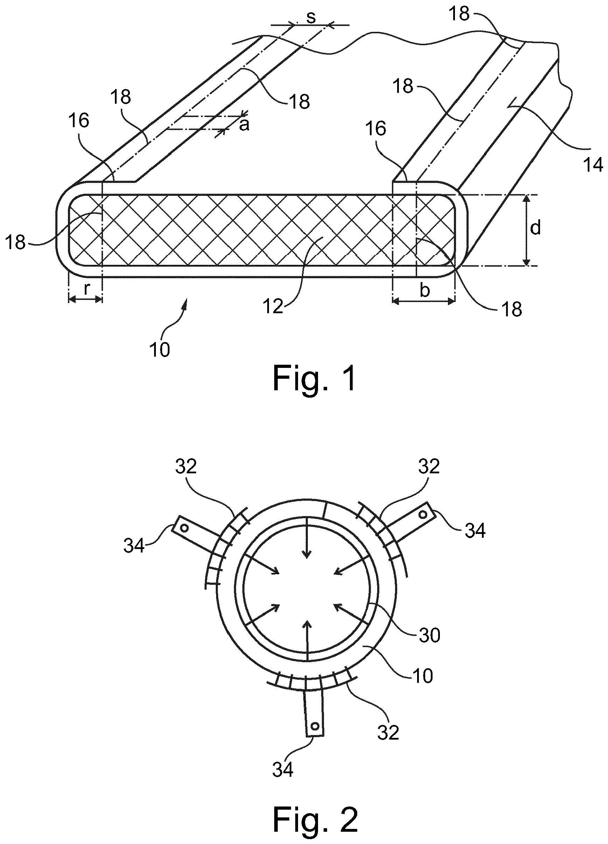

In Figur 1 ist eine streifenförmige Brandschutzmanschette 10 gezeigt, die einen Streifen 12 aus Intumeszenzmaterial enthält. Bei dem Intumeszenzmaterial handelt es sich um eine herkömmliche Zusammensetzung, die beispielsweise in Polymer gebundene Wirksubstanzen wie Blähgrafit oder Ammoniumpolyphosphate enthält. Im gezeigten Ausführungsbeispiel hat der Intumeszenz-Streifen 12 einen rechteckigen Querschnitt mit beispielsweise einer Breite von 50 mm und einer Dicke von 5 mm.

Um den Intumeszenz-Streifen 12 herum ist ein Mantel 14 angeordnet, der aus einem Gewebe oder einem Vlies besteht. Der Mantel kann Fäden aus Glas, Stein, Keramik und/oder Metall enthalten. Der Mantel 14 ist bis zu einer Temperatur von mindestens 500 °C temperaturbeständig. Im Hinblick auf die gewünschte Festigkeit hat er ein Flächengewicht von mindestens 100 g/m².

Wie in Figur 1 zu sehen ist, erstreckt sich der Mantel 14 um eine Flachseite des Intumeszenz-Streifens 12 herum, dann um die beiden schmalen Längsränder bis auf die andere Flachseite. Bei der in Figur 1 gezeigten Ausführungsform erstreckt sich der Mantel 14 mit zwei schmalen Umschlagrändern 16 auf die Flachseite, die zur vollständig abgedeckten Flachseite (hier: der Unterseite) entgegengesetzt ist. Jeder der Umschlagränder 16 hat eine Breite b, die mindestens 50 % der Dicke d des Intumeszenz-Streifens beträgt. Zwischen den beiden Umschlagrändern 16 liegt der Intumeszenz-Streifen 12 frei.

Der Intumeszenz-Streifen 12 kann direkt auf das Material des Mantels 14 aufextrudiert werden oder aber mit diesem verklebt werden. Es ist grundsätzlich auch möglich, den Intumeszenz-Streifen 12 lose auf den Mantel 14 aufzulegen und dann die Ränder umzuschlagen. In jedem Fall ist der Intumeszenz-Streifen 12 mit dem Mantel 14 durch Befestigungsmittel 18 verbunden. Diese sind bei der in Figur 1 gezeigten Ausführungsform durch eine Naht gebildet. Aus Festigkeitsgründen haben die Stiche einen Mindestabstand r vom Außenrand des Intumeszenz-Streifens 12 von 2 mm. Derselbe Mindestabstand s wird vom freien Rand der Umschlagränder 16 eingehalten. Der Abstand a der Stiche voneinander kann zwischen 2 und 25 mm betragen.

Anstelle der Naht 18 können auch Metallklammern verwendet werden, die in geeigneten Abständen in den Intumeszenz-Streifen 12 hineingetrieben werden und den Umschlagrand 16 geeignet fixieren.

In Figur 2 ist die Brandschutzmanschette 10 schematisch angebracht an einem Rohr 30 dargestellt. Die Brandschutzmanschette 10 ist um den Außenumfang des Rohres 30 herumgelegt und wird dort von mehreren Haltern 32 fixiert, die aus Metallblech bestehen und jeweils einen Befestigungsabschnitt 34 aufweisen, mit dem sie an einer Wand, einem Boden oder einer Decke befestigt werden können, durch die das Rohr 30 hindurchgeführt wird. Im Brandfall expandiert das Intumeszenzmaterial aufgrund der einwirkenden Wärme, sodass es die Öffnung verschließt, durch die das Rohr 30 hindurchgeführt wird.

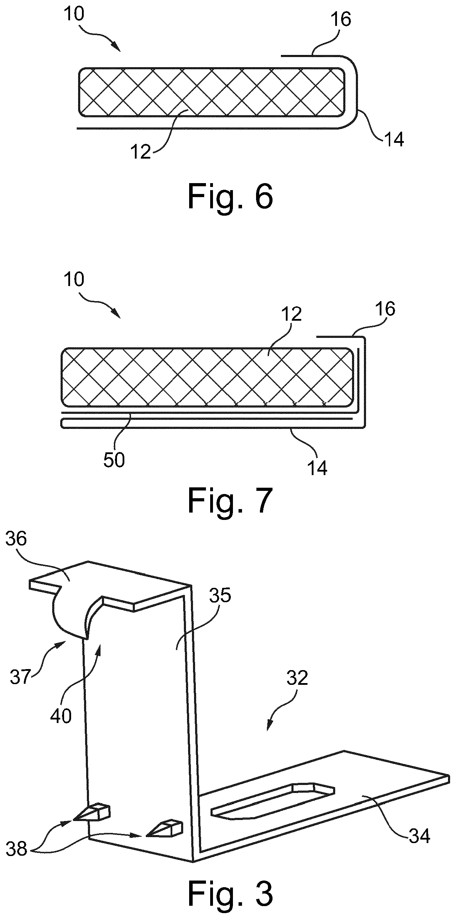

In Figur 3 ist eine erste nicht erfindungsgemäße Ausführungsform des Halters 32 gezeigt. Er besteht aus Blech und weist einen Abstützabschnitt 35 auf, der sich etwa senkrecht zum Befestigungsabschnitt 34 erstreckt. Am vom Befestigungsabschnitt 34 abgewandten Ende des Abstützabschnitts 35 ist ein Halteabschnitt 36 angeordnet, der sich wiederum im rechten Winkel zum Abstützabschnitt 35 erstreckt und somit etwa parallel zum Befestigungsabschnitt 34 verläuft. Der Halter 32 hat somit eine stufenförmige Gestalt. Am freien, vom Abstützabschnitt 35 abgewandten Ende des Halteabschnitts 36 ist ein Verankerungsmittel 37 angeordnet, das hier die Form einer spitz zulaufenden und nach unten, also hin zum Befestigungsabschnitt 34 gekrümmten Kralle hat. Verankerungsmittel 37, Halteabschnitt 36, Abstützabschnitt 35 und Befestigungsabschnitt 34 sind einstückig ausgeführt, insbesondere als Blechstreifen, der gestanzt und in die gewünschte Form gebogen werden kann.

Der Halteabschnitt 36 bildet zusammen mit den benachbarten Bereichen des Abstützabschnittes 35 sowie dem Verankerungsmittel 37 einen Kanal 40, in welchem ein Rand der Brandschutzmanschette 10 aufgenommen werden kann, wie später erläutert wird. Die Breite des Kanals 40 zwischen der Spitze der Kralle des Verankerungsmittels 37 und dem Abstützabschnitt 35 entspricht dabei mindestens der Dicke der Brandschutzmanschette.

Am Abstützabschnitt 35 sind in der Nähe des Befestigungsabschnitts 34 zwei Dorne 38 angeordnet, die ein Arretiermittel bilden und zu der Seite weisen, auf der auch das Verankerungsmittel 37 angeordnet ist.

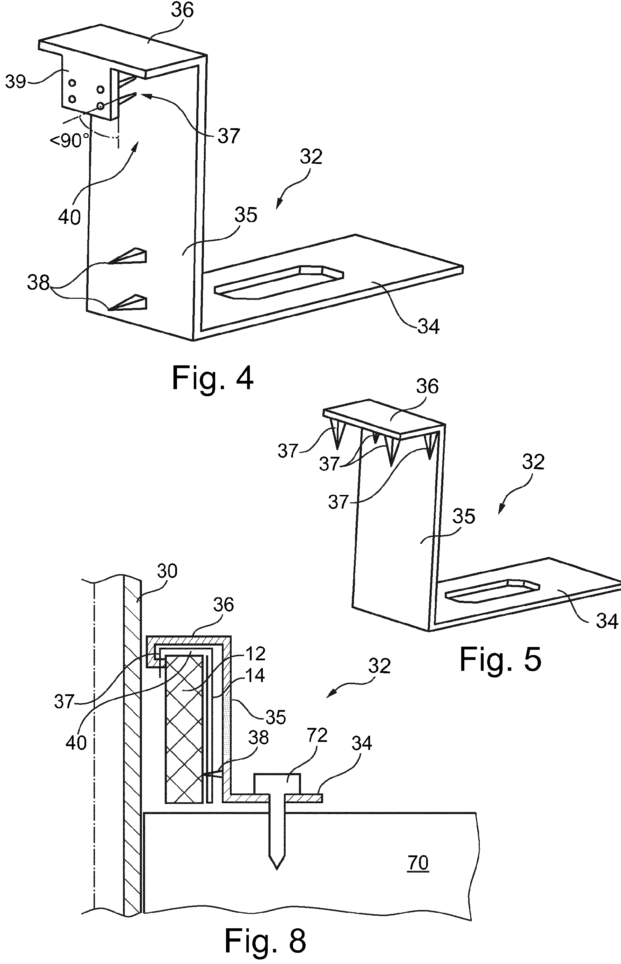

In Figur 4 ist ein Halter gemäß einer zweiten erfindungsgemäßen Ausführungsform gezeigt. Der Unterschied zur ersten Ausführungsform besteht im Wesentlichen in der Ausgestaltung des Verankerungsmittels 37. Es ist hier durch vier Dorne gebildet, die an einer Halteplatte 39 angeordnet sind. Dabei erstrecken sich die Dorne nicht parallel zum Halteabschnitt 36 und damit senkrecht zum Abstützabschnitt 35, sondern leicht schräg nach oben zum Halteabschnitt 36 hin. Dies erleichtert die Anbringung des Halters 32 an der Brandschutzmanschette 10.

In Figur 5 ist ein Halter gemäß einer dritten nicht erfindungsgemäßen Ausführungsform gezeigt. Der Unterschied zur ersten und zur zweiten Ausführungsform besteht darin, dass der Halteabschnitt 36 den Rand der Brandschutzmanschette nicht umgreifen kann, sondern diesem lediglich gegenüberliegt. Das Verankerungsmittel 37 ist durch mehrere Dorne gebildet, die sich im Wesentlichen parallel zum Abstützabschnitt 35 hin zum Befestigungsabschnitt 34 erstrecken.

In Figur 6 ist eine Ausführungsform einer Brandschutzmanschette 10 gezeigt, die besonders gut mit dem Halter 32 zusammenwirken kann. Der Mantel 14 erstreckt sich hier entlang einer Flachseite des Intumeszenz-Streifens 12 und mit seinem Umschlagrand 16 um einen der Längsränder bis auf die andere Flachseite. Der Mantel 14 kann mit dem Intumeszenz-Streifen 12 im Wesentlichen vollflächig verklebt sein, beispielsweise durch eine Klebstoffschicht, oder dadurch verbunden sein, dass das Intumeszenzmaterial auf den Mantel 14 aufextrudiert wird. Auf eine mechanische Befestigung durch Nähte, Klammern oder Niete kann dabei verzichtet werden.

In Figur 7 ist eine weitere Ausgestaltung einer Brandschutzmanschette gezeigt, die für die Halter gemäß den Figuren 3 bis 5 besonders geeignet ist. Der Unterschied zu der in Figur 6 gezeigten Ausführungsform besteht darin, dass die Gewebelage des Mantels 14 im Bereich der unteren Flachseite des Intumeszenz-Streifens 12 doppellagig ausgeführt ist, wobei der freie Randabschnitt des Mantels 14 nach innen eingeschlagen ist, sodass er nicht ausfransen kann. In Figur 7 ist auch eine Klebstoffschicht 50 angedeutet, die zum vollflächigen Verkleben des Mantels 14 mit dem Intumeszenz-Streifen 12 dient.

In Figur 8 ist der Halter 32 gemäß der ersten nicht erfindungsgemäßen Ausführungsform gezeigt, mit dem eine Brandschutzmanschette 10 der in Figur 7 gezeigten Ausführungsform an einem Rohr 30 montiert ist. Der Halter 32 ist an einem Boden 70 angebracht, durch den hindurch sich das Rohr 30 erstreckt. Zur Anbringung wird eine Betonschraube 72 verwendet, mit der der Befestigungsabschnitt 34 am Boden 70 angeschraubt ist. Der Abstützabschnitt 35 stützt die ringförmige Außenseite der Brandschutzmanschette 10 ab, und der bezogen auf Figur 8 obere Rand der Brandschutzmanschette mit der ringförmigen Stirnseite liegt innerhalb des Kanals 40, der vom Halteabschnitt 36 zusammen mit dem angrenzenden Bereich des Abstützabschnitts 35 und dem Verankerungsmittel 37 gebildet wird.

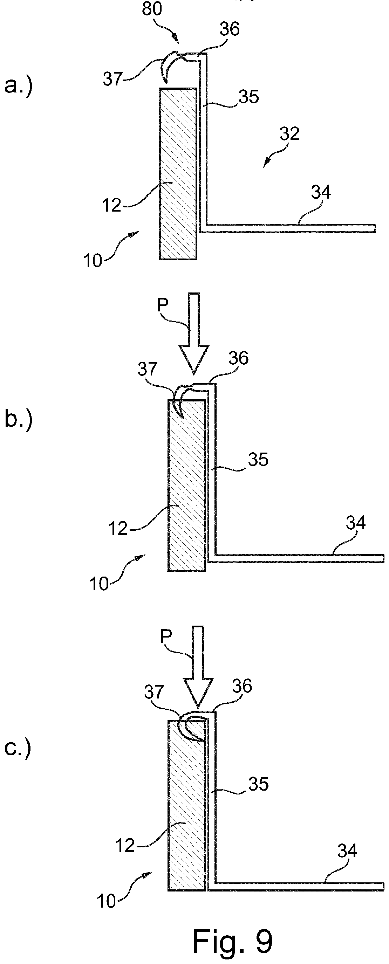

In den Figuren 9a bis 9c ist schematisch die Anbringung einer nicht erfindungsgemäßen Ausführungsvariante des in Figur 3 gezeigten nicht erfindungsgemäßen Halters 32 an einer Brandschutzmanschette 10 gezeigt. Der Unterschied zu der in Figur 3 gezeigten Ausführungsform besteht darin, dass das Verankerungsmittel 37 sich nicht auf der Innenseite der Brandschutzmanschette befindet, sondern im Bereich der ringförmigen Stirnseite. Weiterhin ist die Kralle, die das Verankerungsmittel bildet, durch eine Sollbiegestelle 80 mit dem Halteabschnitt 36 verbunden. Bei der Montage wird zunächst der Halter 32 an der Brandschutzmanschette 10 angeordnet (siehe Figur 9a). Dann wird das Verankerungsmittel 37 nach unten gedrückt (siehe den Pfeil P in Figur 9b), sodass das Verankerungsmittel sich in die Stirnseite der Brandschutzmanschette 10 eingräbt. Im vollständig montierten Zustand (siehe Figur 9c) liegt der Halteabschnitt 36 auf der Stirnseite der Brandschutzmanschette 10 auf, und das Verankerungsmittel 37 ist tief in das Material der Brandschutzmanschette eingegraben. Dabei perforiert das Verankerungsmittel 37 den Mantel 14.

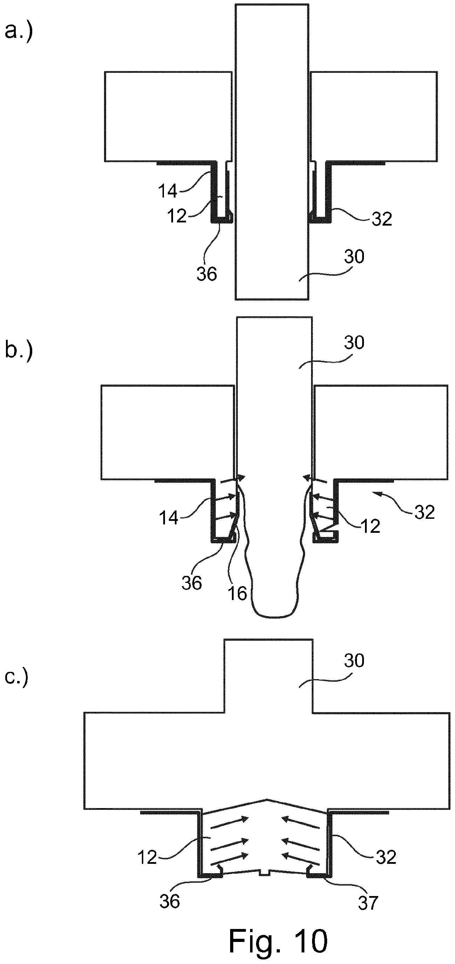

Anhand der Figuren 10a bis 10c wird nun das Zusammenwirken eines nicht erfindungsgemäßen Halters 32 mit einer Brandschutzmanschette beschrieben. In Figur 10a ist der Halter 32 zu sehen, der die Brandschutzmanschette 10 ringförmig um das Rohr 30 herum im Bereich des Durchbruchs durch eine Decke hält. In diesem Zustand muss das Verankerungsmittel 37 an jedem Halter 32 nicht notwendigerweise den Mantel 14 der Brandschutzmanschette 10 perforiert haben. Es ist ausreichend, wenn das Verankerungsmittel 37 dem Mantel eng gegenüberliegt.

In Figur 10b ist die Brandschutzmanschette kurz nach Beginn der Wärmeeinwirkung bei einem Brand gezeigt. Das Rohr 30 beginnt zu schmelzen, während gleichzeitig der Intumeszenz-Streifen 12 expandiert (siehe die eingezeichneten Pfeile). Aufgrund des in alle Richtungen wirkenden Blähdrucks des Intumeszenzmaterials wird der Mantel 14 der Brandschutzmanschette gegen die Verankerungsmittel 37 der Halter 32 gedrückt, sodass dort eine formschlüssige Verbindung entsteht. Diese kann bereits dadurch gebildet sein, dass sich die Spitze der Krallen oder Dorne so weit in das Gewebe des Mantels eingraben, dass dieser nicht mehr verrutschen kann. In Abhängigkeit von der Festigkeit des Mantels und dem wirkenden Blähdruck kann der Mantel 14 auch so weit auf die Dorne oder Krallen aufgedrückt werden, dass diese den Mantel perforieren. In jedem Fall ist der Umschlagrand 16 des Mantels 14 der Brandschutzmanschette 10 so fest an den Haltern 32 verankert, dass eine ringförmige Abstützzone gebildet ist, die gewährleistet, dass das Intumeszenzmaterial sich im Wesentlichen in radialer Richtung ausdehnt und nicht in axialer Richtung nach unten, bezogen auf Figur 10b. Der innen liegende Bereich des Mantels 14 beeinträchtigt dabei die Expansion nicht, da er nur sehr kurz ausgeführt ist.

In Figur 10c ist ein Zustand gezeigt, wie er nach vollständiger Expansion des Intumeszenzmaterials vorliegt. Die im Ausgangszustand ringförmige Brandschutzmanschette ist so weit expandiert, dass ein massiver Stopfen gebildet ist, der den Durchbruch für das Rohr 30 verschließt und von den Haltern 32 zuverlässig an seinem Ort gehalten wird.

## Patentansprüche

1. Halter (32) für eine Brandschutzmanschette (10), mit einem Befestigungsabschnitt (34), einem Abstützabschnitt (35) und einem Halteabschnitt (36), der mit einem Verankerungsmittel (37) versehen ist, das formschlüssig mit dem Mantel (14) einer Brandschutzmanschette (10) zusammenwirken kann, und der zweifach abgewinkelt ausgehend vom Abstützabschnitt (35) ausgeführt ist, sodass er zusammen mit dem Abstützabschnitt (35) einen Aufnahmekanal (40) für einen Randabschnitt der Brandschutzmanschette (10) bildet, wobei das Verankerungsmittel (37) durch mindestens einen Dorn gebildet ist, **dadurch gekennzeichnet, dass** das Verankerungsmittel (37) dem Abstützabschnitt (35) gegenüberliegt.

2. Halter (32) nach Anspruch 1, **dadurch gekennzeichnet, dass** das Verankerungsmittel (37) sich in einem Winkel kleiner 90° zum Abstützabschnitt (35) und hin zum Boden des Aufnahmekanals (40) erstreckt.

3. Halter (32) nach einem der vorhergehenden Ansprüche, **dadurch gekennzeichnet, dass** der Abstützabschnitt (35) mit mindestens einem Arretiermittel (38) versehen ist.

4. Halter (32) nach Anspruch 3, **dadurch gekennzeichnet, dass** das Arretiermittel (38) durch mindestens einen Dorn gebildet ist.

5. Baugruppe aus einem Halter (32) nach einem der Ansprüche 1 bis 4 und einer Brandschutzmanschette (10), die einen Streifen (12) aus einem Intumeszenzmaterial aufweist, der von einem Mantel (14) an mindestens einer Flachseite und einem Längsrand umgeben ist, wobei das Verankerungsmittel (37) sich in den Mantel im Bereich des Längsrandes eingraben kann.

## Claims

1. Holder (32) for a fire protection sleeve (10), comprising a fastening portion (34), a support portion (35), and a holding portion (36) that is provided with an anchoring means (37) which can interact interlockingly with the jacket (14) of a fire protection sleeve (10) and which is designed to be angled twice starting from the support portion (35) so that it forms, together with the support portion (35), a receiving channel (40) for an edge portion of the fire protection sleeve (10), the anchoring means (37) being formed by at least one pin, **characterized in that** the anchoring means (37) is opposite the support portion (35).

2. Holder (32) according to claim 1, **characterized in that** the anchoring means (37) extends at an angle of less than 90° with respect to the support portion (35) toward the bottom of the receiving channel (40).

3. Holder (32) according to either of the preceding claims, **characterized in that** the support portion (35) is provided with at least one locking means (38).

4. Holder (32) according to claim 3, **characterized in that** the locking means (38) is formed by at least one pin.

5. Assembly consisting of a holder (32) according to any of claims 1 to 4 and a fire protection sleeve (10) which has a strip (12) made of an intumescent material which is surrounded by a jacket (14) on at least one flat side and a longitudinal edge, wherein the anchoring means (37) can dig into the jacket in the region of the longitudinal edge.

## Revendications

1. Support (32) pour manchette coupe-feu (10), comportant une section de fixation (34), une section d'appui (35) et une section de support (36) lequel support est pourvu d'un moyen d'ancrage (37) pouvant coopérer par complémentarité de forme avec l'enveloppe (14) d'une manchette coupe-feu (10), et est conçu pour être incliné à deux endroits à partir de la section d'appui (35), de sorte qu'il forme, conjointement avec la section d'appui (35), un canal de réception (40) pour une section de bord de la manchette coupe-feu (10), le moyen d'ancrage (37) étant formé par au moins un mandrin, **caractérisé en ce que** le moyen d'ancrage (37) se trouve opposé à la section d'appui (35).

2. Support (32) selon la revendication 1, **caractérisé en ce que** le moyen d'ancrage (37) s'étend selon un angle inférieur à 90° par rapport à la section d'appui (35) et vers le fond du canal de réception (40).

3. Support (32) selon l'une des revendications précédentes, **caractérisé en ce que** la section d'appui (35) est pourvue d'au moins un moyen d'arrêt (38).

4. Support (32) selon la revendication 3, **caractérisé en ce que** le moyen d'arrêt (38) est formé par au moins un mandrin.

5. Ensemble constitué par un support (32) selon l'une des revendications 1 à 4 et une manchette coupe-feu (10), et présentant une bande (12) en un matériau intumescent entourée d'une enveloppe (14) sur au moins un côté plat et un bord longitudinal, le moyen d'ancrage (37) pouvant s'incruster dans l'enveloppe dans la zone du bord longitudinal.
